# EUROPEAN PATENT APPLICATION

(11) **EP 4 421 495 A1**
(43) Date of publication of application: **28.08.2024**
(21) Application number: 23275035.6
(22) Date of filing: 24.02.2023
(51) Int. Cl.: G01P 1/02, G01P 5/165, G01P 13/02, G01D 11/24

(54) **VEHICLE SENSOR SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A vehicle sensor system comprising: a door and a sensor, wherein in a first position the door is closed and the sensor is retracted and in a second position the door is open and the sensor is deployed; and wherein the door and sensor are configured to move between the first and second positions simultaneously.

## Description

### FIELD

The present invention relates a vehicle sensor system, in particular an air data sensor.

### BACKGROUND

Vehicle sensor systems, in particular air data sensors, are used to collect various measurements for systems on board a vehicle. Such measurements may be used to calculate parameters for a vehicle or even form inputs for a system for controlling the vehicle. For example, in the context of an aircraft, pitot probes are well known sensors able to measure total air pressure. Another well-known aircraft sensor is a static pressure sensor which measures the static pressure around the aircraft. Pitot and static pressure measurements may be used to determine the speed of the aircraft. Static pressure may be used to determine the altitude of the aircraft. Pitot and static pressure sensors can be combined in a single, pitot-static probe.

Traditionally, such sensors are mounted on the skin of a vehicle in order to obtain accurate measurements. For example, a pitot-static probe tends to be mounted on the outer skin of the aircraft - ideally on the aircraft nose or on the aircraft forebody - where undisturbed airflow ahead of the aircraft can be measured, As such, a pitot-static probe generally extends outwards from the skin of the aircraft in order to mitigate the aerodynamic interference effects of the boundary layer and aircraft skin surface irregularities. Such exposed sensors extending from the aircraft skin present a number of disadvantages both on the ground and in the air. Firstly, these sensors may be inadvertently damaged by accident, especially when the aircraft is on the ground e.g. ground equipment hitting the probe or ground staff inadvertently walking into the sensor. Secondly, small animals e.g. insects tend to favour nesting in the orifices of exposed sensors. Also, in flight, sensors may be struck by birds or in-flight refuelling drogues. This may disable the sensor or cause the sensor to give erroneous readings which may be catastrophic for the safety of the aircraft as flight control systems often rely on measurements taken by the sensors. In the air, exposed sensors may increase the amount of drag exerted on the aircraft leading to lower fuel efficiency. Further, some aircraft, especially military aircraft, may rely on possessing a low radar cross section in order to avoid detection by hostile radar systems. Geometries that extend from the aircraft skin are highly disadvantageous in such contexts as they greatly increase the radar cross section of the aircraft.

Therefore, there is a need to overcome or at least partially mitigate some of the problems and disadvantages associated with exposed sensors on vehicles, especially aircraft, whether identified here or elsewhere.

### SUMMARY

According to a first aspect of the present invention, there is provided a vehicle sensor system comprising: a door and a sensor, wherein in a first position the door is closed and the sensor is retracted and in a second position the door is open and the sensor is deployed; and wherein the door and sensor are configured to move between the first and second positions simultaneously.

In some arrangements, the sensor may be selectively deployed by a user e.g. a pilot of an aircraft. In this way, the sensor may not always be in the deployed position. This may be advantageous in preventing damage to the sensor or preventing fouling of the sensor, for example by animals e.g. insects, nesting in the sensor. Further, when fitted to a vehicle, drag on the vehicle may be reduced. In the context of an aircraft, particularly a military aircraft, more particularly a stealth aircraft, retraction of the sensor may aide the aircraft in maintaining a low radar cross section.

When the sensor is deployed, measurement of a parameter may be achieved. For example, if the sensor is a pitot probe, sensing of the airflow may be achieved in the second position by opening the door and deploying the pitot probe into the oncoming undisturbed airflow. When the sensor is retracted, no measurement by the sensor is permitted.

It is envisaged that the sensor may be in the first position i.e. retracted position when the aircraft is approaching or within a threat zone e.g. hostile radar or anti-aircraft defence systems in order to minimise the radar cross section of the aircraft. The sensor may also be in the first position when in storage or parked in order to prevent accidental damage to the sensors.

Taking a military stealth aircraft as an example, the system may be in the first position with the sensor retracted and door closed when starting the aircraft's engines on the ground. When ready to taxi, the system may move to the second position such that the sensor is deployed and the door opened. In this way, measurement of a parameter e.g. airspeed may be achieved. The aircraft will then take off and reach a cruising altitude. When the aircraft reaches a hostile threat zone and where minimisation of radar cross section is key, the system may move to the first position such that the sensor is retracted and the door closed thereby minimising radar reflections from the aircraft's outer skin. After the threat has passed, the system may move again to the second position and deploy the sensor and continue measuring a parameter. Once the aircraft has landed and shut down, the system may be moved to the first position to prevent inadvertent damage to the sensor or to protect the sensor from fouling by animals.

The system may move from the first position to the second position in response to a user's command, for example a pilot or driver of the vehicle may selectively deploy and retract the system. Alternatively, the system may be automated such that the system may move between the first and second position automatically. For example, upon engine start, the system may move from the first position to the second position automatically.

The sensor system may be fitted to the internal surface of a vehicle such that the door is an opening between the internal and external surface of the vehicle. As such, the sensor system may be supplied as a retro-fit system for an existing vehicle or alternatively may be supplied as an integral part of the vehicle upon manufacture.

The sensor may be configured to be deployed from the first position to the second position through an opening defined by the door.

Such an arrangement may minimise the overall volume of the system which may be advantageous in vehicles where volume is constrained, for example aircraft or spacecraft. When moving from the first position to the second position, the sensor may occupy the space formerly occupied by the door in the first position.

The sensor may be an air data sensor. An air data sensor may be arranged to measure certain parameters in the air or on the ground. In one example the air data sensor may be configured to measure pitot pressure, static pressure, temperature or airflow angle. The sensor may be a multi-function sensor. A multi-function sensor is configured to measure more than one parameter simultaneously. The multi-function sensor may be configured to measure pitot pressure, static pressure, temperature or airflow angle, or any combination thereof simultaneously. For example, a multi-function probe may be able to measure pitot pressure and airflow angle simultaneously. Advantageously, provision of a multi-function sensor minimises the requirement for multiple sensors in a vehicle and may reduce the overall complexity of the system. Further, minimising external sensors on a vehicle may minimise the drag force on the vehicle. In the context of military aircraft, multi-function sensors may minimise external geometries on the outside of the aircraft surface and therefore reduce the overall radar cross section of the aircraft. Examples of multi-function sensors include SmartProbe^{®} or Model 0857 Multi-Function Probe manufactured by Collins Aerospace Systems^{™} or the Integrated Multi-Function Probe (IMFPO) manufactured by Aerosonic^{™}.

The door and sensor may be moved from the first position to the second position by at least one drive means. The door and sensor may be moved by separate respective drive means. Advantageously such an arrangement tends to allow for greater redundancy in the system however this may suffer from the disadvantage that should one motor fail, the sensor and door may interfere and may cause damage to either component should the door be unable to move out of the way of the sensor. Accordingly, auxiliary drive means may be configured to drive the door and sensor, either separately or together, should the primary drive means fail. In an alternative and preferable arrangement, the door and sensor are moved by a single drive means (i.e. one means for moving the door and the sensor simultaneously). Such an arrangement minimises the volume required by the system and reduces the complexity of the system overall. The power requirement by the system may also be reduced. In a maintenance context, replacement and/or repair of a single motor arrangement may be beneficial in terms of time and cost in servicing the system.

The door and sensor may be configured to translate in a substantially linear motion from the first position to the second position. In this document, translational movement is defined as moving in a substantially linear motion with the exclusion of rotational movement about an axis. That is to say, the door and sensor do not rotate about an axis when moving between the first and second positions. Whilst translation between the first position and second position will be substantially along one axis, at least parts of the translation may deviate from the axis when moving between a first position and second position. For example, the door when moving from a first position to the second position may move inwardly from an opening before moving substantially laterally away from an opening in order to avoid interference with the surrounding surface of the opening.

In one example, the drive means comprises a worm screw driven by a motor.

Advantageously, worm screws allow precise movement of the door and sensor and are generally more reliable than belt systems from a maintenance perspective.

In one arrangement, the sensor is disposed on a moveable carriage; and wherein: the door is configured to translate in a substantially linear motion in a first direction; the moveable carriage is configured to translate in a substantially linear motion in a second direction perpendicular to the first direction; the door is connected to the moveable carriage via a connecting means; and wherein: when the door is moved in the first direction, the connecting means is configured to simultaneously urge the moveable carriage to move in the second direction.

In this arrangement, the moveable carriage may be held within at least one guide rail to constrain the movement of the carriage in the first direction. The moveable carriage may comprise one or more spigots which may engage with the at least one guide rail. Preferably there are at least two guide rails, disposed at opposite ends of the moveable carriage so as to balance the forces exerted on the moveable carriage. Similarly, the door may be mounted on a guide rail system to constrain the movement of the door in the second direction. The door may comprise one or more spigots as with the moveable carriage.

The sensor may be removably attached to the moveable carriage. In this way, the system may be able to accommodate a COTS sensor without specialist modification or design in order to be used in the system. The moveable carriage may comprise a fitting suitable for receiving different types of sensors. In this way, the moveable carriage is effectively made sensor agnostic such that sensors may be switched out on the moveable carriage without further modification. The sensor may be attached via a mechanical connection, interference fit and/or adhesive bonding. Preferably the sensor is attached on the moveable carriage by mechanical connection, for example a bolted connection.

Whilst, in a preferred example, the door and moveable carriage are configured to both translate in a substantially linear motion at 90° to each other, (in other words the second direction is perpendicular to the first direction, i.e. 90°), it will be appreciated that the first and second directions may be displaced from each other by any other suitable angle, for example 30°, 45°, 60° so long as the door and sensor do not interfere when moving simultaneously. The connecting means is configured to transfer the force of the door moving to the movable carriage such that the carriage (and sensor) is urged to move in the second direction. Accordingly the connecting means may be a rigid or flexible member. For example, the connecting means may be a rigid member such as a strut pinned at each end to the door and moveable carriage respectively or may be a flexible member such as a simple wire connecting the door to the movable carriage. Preferably there is more than one connecting means between the door and moveable carriage. Preferably there is one connecting means disposed at opposite sides of the door and movable carriage in order to distribute the forces. Preferably the connecting means is a rigid member, more preferably the connecting means is a pinned strut.

In an alternative arrangement, the sensor is disposed in or on a moveable carriage; and wherein the drive means comprises a first belt system and a second belt system; the first and second belt systems are arranged to be driven by one or more motors; wherein the door is connected to the first belt system and configured to translate in a substantially linear motion a first direction; and wherein the movable carriage is connected to the second belt system and configured to translate in a substantially linear motion in a second direction perpendicular to the first direction.

In this arrangement, the first and second belt systems may comprise at least two pulleys mounted on respective axles. The first belt system may be driven by a first motor. The second belt system may be driven by a second motor. The first and second motors may be different, independent motors. Alternatively, the first belt system and second belt system may share a common pulley or axle driven by a single motor such that upon rotation of the common pulley, the door and moveable carriage are caused to move simultaneously by the respective first and second belt systems. The first and second belt systems may be a chain and sprocket type arrangement or a simple rubber belt type arrangement. The first and second belt systems may be the same or different types. As in the above arrangement, the moveable carriage and door may be mounted on respective guide rail systems. As in the above arrangement, the moveable carriage and door may comprise one or more spigots for engagement with the guide rail systems.

The sensor may comprise a transducer located on the moveable carriage. Such an arrangement may remove the need for flexible electrical connections and pneumatic lines to connect the sensor to the transducer thereby reducing the risk of damage and/or wear on electrical connections and pneumatic lines.

According to a second aspect, there is provided a vehicle comprising the vehicle sensor system according to the first aspect. The vehicle may be an aircraft, a ground based vehicle e.g. a car or tank, a watercraft e.g. a ship, boat or submarine or a spacecraft e.g. a satellite or rocket. Preferably, the vehicle is an aircraft. More preferably the aircraft is a military aircraft, preferably a stealth aircraft. The invention may especially find utility in military aircraft, in particular military aircraft e.g. fighter jet, owing to the unique requirements subject to these types of vehicles. For example, military aircraft may require a low radar cross section or may travel at speeds much faster than conventional civilian aircraft which necessitate retraction of sensor systems onboard the aircraft.

The vehicle may comprise a skin with an outer side and an inner side and wherein the skin further comprises an opening; and wherein the system is mounted on the inner side of the skin and wherein the door is configured to close the opening in the first position and wherein the sensor is configured to deploy through the opening to the second position.

The outer side may be exposed to the oncoming airflow and the inner side may be shielded from the outside environment. The system may be fitted to the skin (e.g. aircraft skin) integrally during manufacture of the vehicle (e.g. aircraft) or may be fitted as part of an internal frame of the vehicle during manufacture of the vehicle (e.g. aircraft). Alternatively, the system may be supplied as a retrofit installation wherein an opening is made in the skin of the vehicle (e.g. aircraft) and wherein the system is mounted on the inner side of the skin. The door may be made of the same material as the skin or may be made of a different material. Preferably the door is made of the same material as the skin. The skin and/or the door may be a made of a metal, metal alloy or composite material, preferably a composite material, more preferably a carbon composite material. The door may further comprise a coating. A coating may include a painted surface, for example an epoxy based paint and may further include a functional coating, for example a radar adsorbent coating.

According to a third aspect, there is provided a method of deploying the vehicle sensor system according to the first or second aspect, wherein the method comprises: moving the door from the first position to the second position and simultaneously moving the sensor from the first retracted position to the second deployed position.

### BRIEF DESCRIPTION OF THE FIGURES

Embodiments of the invention will now be described by way of example only with reference to the figures, in which:
Figures 1a & 1b show an example arrangement of the vehicle sensor system in the first position;
Figure 2 shows the arrangement of Figures 1a & 1b when the system is transitioning between the first position and the second position;
Figures 3a & 3b show the arrangement of Figures 1a, 1b and 2 when the system is in the second position;
Figures 4a & 4b show an alternative arrangement of the vehicle sensor system; and
Figure 5 shows a vehicle comprising the vehicle-sensor system.

### DETAILED DESCRIPTION

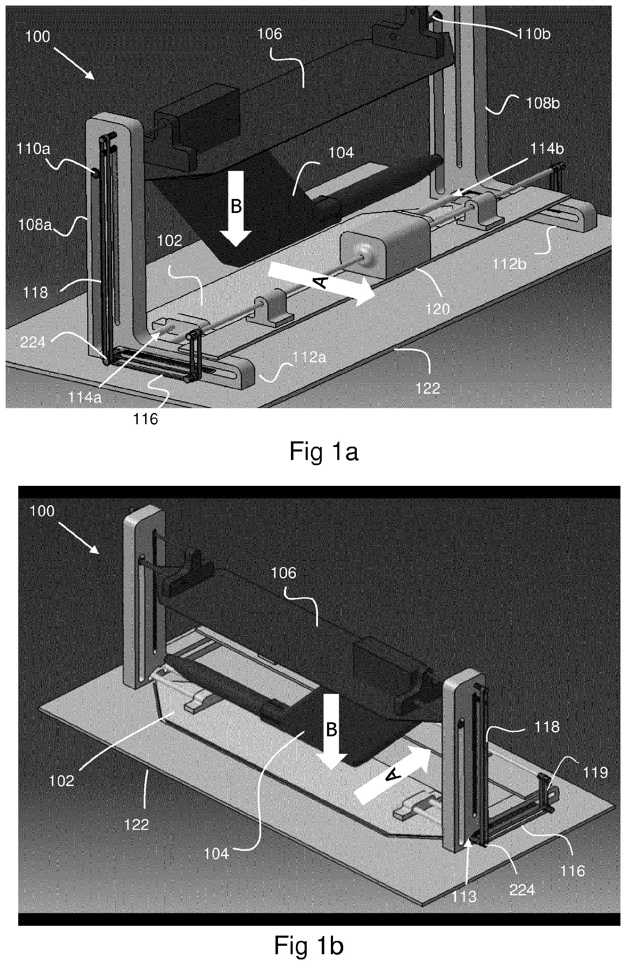

Figures 1a & 1b show an example arrangement of a vehicle sensor system 100 according to the present invention. The system 100 comprises a door 102 and a sensor 104. In this example, the system 100 is mounted on a skin 122 such that the door 102 defines an opening in the skin 122. In this example, the system 100 is in the first position, i.e. retracted position with the door 102 closed. In this arrangement, the sensor 104 is an air data sensor in the form of an L- Probe used for measuring pitot pressure. The door 102 is moveably attached to two guide rails 112a 112b disposed at opposite ends of the door 102. The two guide rails 112a 112b constrain translational movement of the door in a first direction denoted by the Arrow A. The door 102 comprises two spigots 114a 114b. Each of the two spigots 114a 114b engage with respective guide rails 112a 112b such that each spigot is able to slide freely within the groove of the respective guide rails 112a 112b. The sensor 104 is mounted on a moveable carriage 106 which is configured to translate in a first direction denoted by the arrow B. The moveable carriage is movably attached to two guide rails 108a 108b disposed at opposite ends of the moveable carriage 106. The moveable carriage 106 comprises two spigots 110a 110b. Each of the two spigots 110a 110b engage with respective guide rails 108a 108b such that each spigot is able to slide freely within the grooves of the respective guide rails 108a 108b. The second direction B is perpendicular to the first direction A. In this example, the guide rails 108a and 112a are machined from a single piece. Likewise, the guide rails 108b and 112b are machined from a single piece. In some examples, the groove of the guide rail 108a, 108b, 112a, 112b may be linear, i.e., a straight line. In some examples, the groove of the guide rail may be non-linear, that is to say, there may be provided with one or more arcs in the groove. This may be especially advantageous to move the door 102 away from the opening before translating laterally away from the opening to prevent interference with a skin 122. In this example, the guide rails 108a and 108b are linear and guide rails 112a and 112b comprise an arc 113 at one end so as to urge the door slightly in direction B from the opening before moving laterally in direction A.

The system 100 comprises a drive means. In this example the drive means comprises a first belt system 116 and a second belt system 118. The door 102 is attached to the first belt system 116 and the moveable carriage 106 is attached to the second belt system 118. In this arrangement, the first and second belt systems are driven by a single motor 120 although in other arrangements, the first and second belt systems may be driven by separate motors. The first and second belt systems share a common pulley 224. The pulley 224 defines a common axis where both first 116 and second belt systems 118 intersect and transfer rotational movement between the first 116 and second belt systems 118. In this arrangement, there is also provided an intermediate belt system 119 between the single motor 120 and the first belt system 116 although in other arrangements, the motor 120 directly drives the first 116 or second belt systems 118.

The operation of the system 100 will now be described with reference to Figures 1a, 2, 3a & 3b.

Figures 1a & 1b show the system 100 in the first position wherein the door 102 is closed and the sensor 104 is retracted. The system 100 may receive a command to transition from the first position to the second position i.e. so that the sensor 104 is deployed. The command may be initiated by a user of a vehicle (not shown) or may be controlled by a controller (not shown) such that the transition to the second position is automatic.

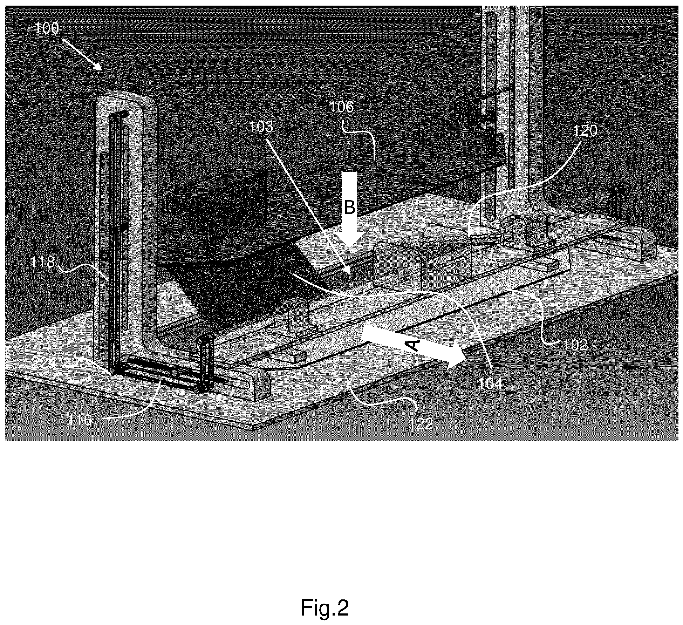

Figure 2 shows the system 100 transitioning to the second position such that the sensor 104 is deployed through the opening 103. In operation, the motor 120 drives the first belt system 116 via the intermediate belt system 119 which in turn translates the door 102 laterally with respect to the skin 122 along direction A. Simultaneously, the first belt system 116 drives the second belt system 118 via the common pulley 224 which translates the moveable carriage 106 and sensor 104 downwards towards the opening 103 along direction B.

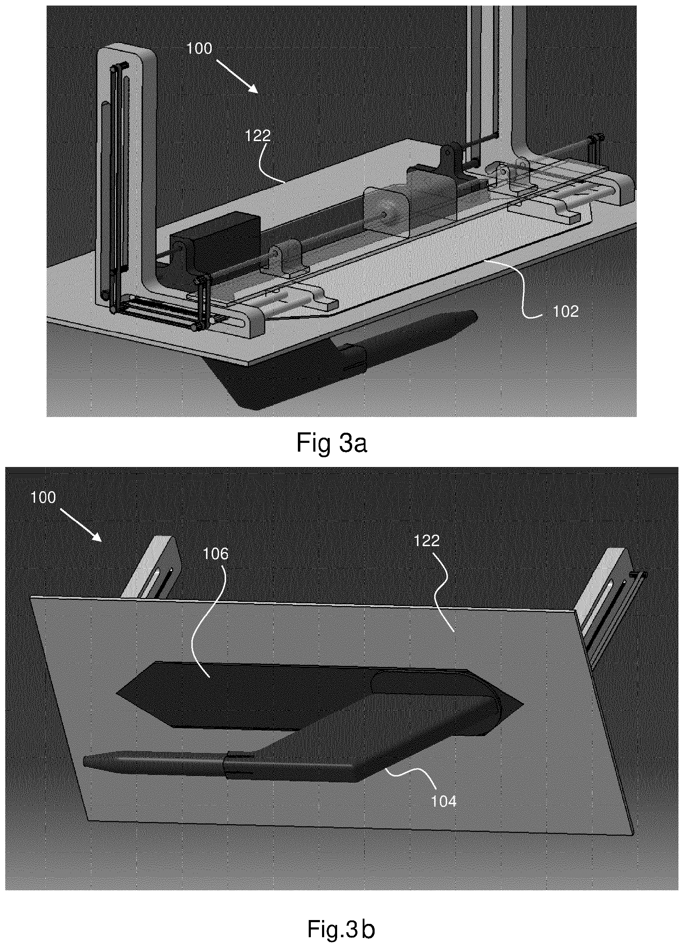

Figure 3a & 3b show the system 100 in the second position wherein the sensor 104 is fully deployed. In this example the underside of the moveable carriage 106 is flush with the outer side of the skin 122.

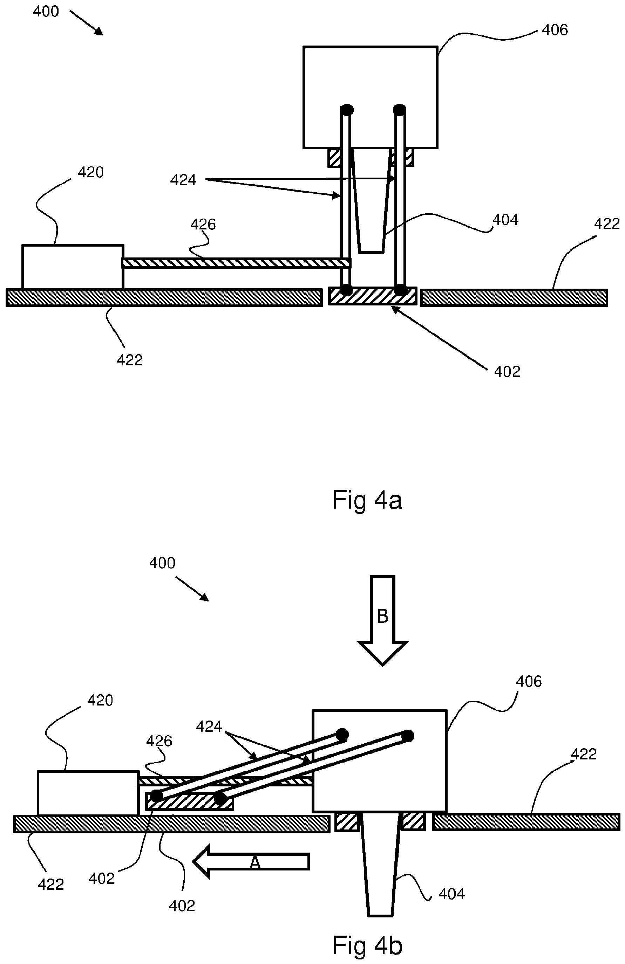

Figures 4a & 4b show an alternative arrangement of the vehicle sensor system 400. As before, the system 400 comprises a door 402 and a sensor 404. The system 400 is mounted on a skin 422 such that the door 402 defines an opening (not shown) in the skin 422. Figure 4a shows the system 400 in the first position i.e. retracted position with the door 402 closed and Figure 4b shows the system 400 in the second position i.e. deployed position with the door 402 open. In this arrangement, the sensor 404 is a conical air data probe mounted on a moveable carriage 406. As before, the door 402 and moveable carriage 406 are constrained by guide rails (not shown). The door 402 is configured to translate in a substantially linear motion in a first direction A and the moveable carriage 406 is configured to translate in a substantially linear motion in a second direction B perpendicular to the first direction A. The door 402 is connected to the moveable carriage 406 via a connecting means 424. When the door 402 is moved in the first direction A, the connecting means 424 is configured to simultaneously urge the moveable carriage 406 to move in the second direction B such that both the door 402 and moveable carriage 406 move simultaneously. In this example, the connecting means 424 comprise two rigid struts having one end pinned to the door 402 and having another end pinned to the moveable carriage 406. The door 402 is moved from the first position to the second position by a single drive means in the form of a worm screw 426 driven by a motor 420.

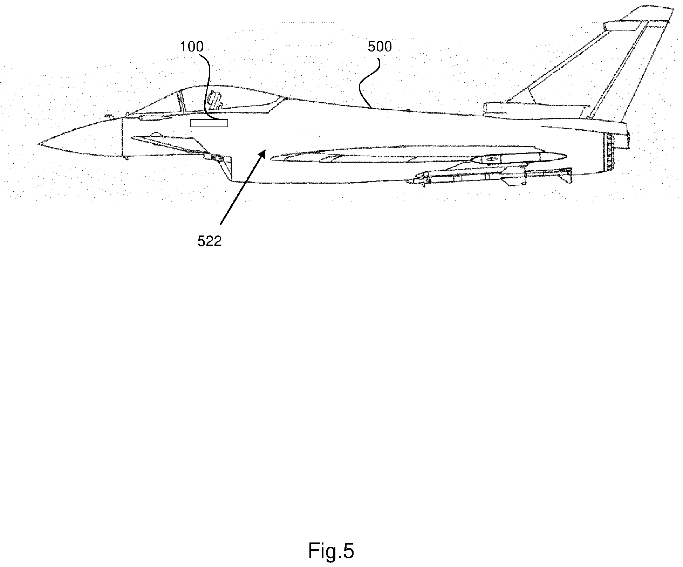

Figure 5 shows a vehicle 500 comprising the vehicle sensor system 100. In this example, the vehicle 500 is an aircraft, specifically a military aircraft. In this example the aircraft 500 comprises a skin 522 with an outer side and inner side and wherein the skin 522 comprises an opening (not shown).

In this arrangement, the system 100 is mounted on the inner side of the skin 522 wherein the door is configured to close the opening in the first position and wherein the sensor is configured to deploy through the opening in the second position.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects are apparent from the description, drawings, and claims. As can be appreciated from the description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

Any references to directional and positional descriptions such as, upper, lower, proximal, distal, inside, outside, rear, and directions e.g. "vertical", and "horizontal" etc. are to be interpreted by a skilled reader in the context of the examples described to refer to the orientation of features shown in the drawings, and are not to be interpreted as limiting the invention to the literal interpretation of the term, but instead should be as understood by the skilled addressee.

## Claims

1. A vehicle sensor system comprising:
a door and a sensor, wherein
in a first position the door is closed and the sensor is retracted and in a second position the door is open and the sensor is deployed; and wherein
the door and sensor are configured to move between the first and second positions simultaneously.

2. The system according to claim 1, wherein the sensor is configured to be deployed from the first position to the second position through an opening defined by the door.

3. The system according to any preceding claim, wherein the sensor is an air data sensor.

4. The system according to any preceding claim, wherein the sensor is a multi-function sensor.

5. The system according to claims 3 or 4, wherein the air data sensor measures pitot pressure, static pressure, temperature or airflow angle and when dependent on claim 4, any combination thereof.

6. The system according to any preceding claim, wherein the door and sensor are moved from the first position to the second position by at least one drive means.

7. The system according to claim 6, wherein the door and sensor are configured to translate in a substantially linear motion from the first position to the second position.

8. The system according to claim 6 or 7, wherein the drive means comprises a worm screw driven by a motor.

9. The system according to any preceding claim, wherein the sensor is disposed on a moveable carriage; and wherein:
the door is configured to translate in a substantially linear motion in a first direction;
the moveable carriage is configured to translate in a substantially linear motion in a second direction perpendicular to the first direction;
the door is connected to the moveable carriage via a connecting means; and wherein:
when the door is moved in the first direction, the connecting means is configured to simultaneously urge the moveable carriage to move in the second direction.

10. The system according to claim 6 or 7, wherein the sensor is disposed in or on a moveable carriage; and wherein
the drive means comprises a first belt system and a second belt system;
the first and second belt systems are arranged to be driven by one or more motor;
wherein the door is connected to the first belt system and configured to translate in a substantially linear motion a first direction; and
wherein the movable carriage is connected to the second belt system and configured to translate in a substantially linear motion in a second direction perpendicular to the first direction.

11. The system according to claim 9 or 10, wherein the sensor comprises a transducer located on the moveable carriage.

12. A vehicle comprising the vehicle sensor system according to any preceding claim.

13. The vehicle according to claim 12, wherein the vehicle is an aircraft.

14. The vehicle according to claim 12 or 13, wherein:
the vehicle comprises a skin with an outer side and an inner side and wherein the skin further comprises an opening; and wherein
the system is mounted on the inner side of the skin and wherein the door is configured to close the opening in the first position and wherein the sensor is configured to deploy through the opening to the second position.

15. A method of deploying the vehicle sensor system according to any of claims 1 to 11, wherein the method comprises:
moving the door from the first position to the second position and simultaneously moving the sensor from the first retracted position to the second deployed position.
